# EUROPEAN PATENT SPECIFICATION

(11) **EP 1 889 402 B1**
(45) Date of publication and mention of the grant of the patent: **05.01.2011**
(21) Application number: 06768764.0
(22) Date of filing: 05.06.2006
(51) Int. Cl.: H04L 12/24

(54) **Server, methods and computer-readable media for discovering neighbor networks in a mobile station**
Server, Verfahren und computerlesbare Medien zur Erkennung benachbarter Netzwerke in einer Mobilstation
Serveur, procédés et supports lisibles par ordinateur pour la recherche de réseaux voisins dans une station mobile

(30) Priority: 06.06.2005 US 687833 P; 27.01.2006 US 342326; 24.02.2006 US 776221 P; 01.06.2006 KR 20060049467
(43) Date of publication of application: 20.02.2008
(73) Proprietor: SAMSUNG ELECTRONICS CO., LTD., Gyeonggi-do 443-742 (KR)
(72) Inventor: ALPER, Yegin, Baltalimani Cam Sokak No. 1, Istanbul, (TR); HAN, Youn-Hee 502-1803, Geumhwa Maeul Jugong Apt., Yongin-si, Gyeonggi-do 446-920 (KR); CHOI, JinHyeock, Suwon-si, Gyeonggi-do 443-470 (KR); JANG, Hee-Jin, Samsung Advanced Institute of Technologie, Yongin-si, Geyonggi-do 446-712 (KR); LIU, Xiaoyu, Samsung Advanced Institute of Technologie, Yongin-si, Gyeonggi-do 446-712 (KR)
(74) Representative: Grünecker, Kinkeldey, Stockmair & Schwanhäusser Anwaltssozietät
(86) International application number: PCT/KR2006/002158
(87) International publication number: WO 2006/132487

(56) References cited:
- WO-A-03/092315
- WO-A1-01/08152
- WO-A1-03/058917
- WO-A2-03/085892
- US-A1- 2002 018 476
- US-A1- 2004 081 122
- US-A1- 2005 073 992

## Description

### Technical Field

The present invention relates to a wireless network, and more particularly, a method that a mobile station discovers a neighbor network in an Internet protocol based wireless network, a network management server for enabling the method, and a method of operating the network management server.

### Background Art

As demand for a mobile communication has been increasing, development of many wireless networks has been performed. Also, in order to provide a seamless service of such heterogeneous wireless networks, various discussions and technology developments of a next generation network (NGN) have been proceeding.

The wireless network includes a local area network (LAN), a wide area network (WAN), a metropolitan area network (MAN), a wireless LAN network, a wireless personal area network (WPAN), a general packet radio service (GPRS) system, a wireless fidelity (WiFi) system, a worldwide interoperability for microwave access (WiMAX) system, and a code division multiple access (CDMA) 2000 system. WiFi indicates a particular type of a WLAN which uses IEEE 802.11-related specifications. WiMAX indicates a type of a broadband wireless access based on the IEEE 802.16 standard for MAN. Such wireless network systems enable communications among various mobile stations such as a personal computer, a mobile phone, or a portable communication terminal. Above-described wireless network system further includes at least one bridge element such as an access point or an access node where entry/exit of user traffic is performed.

In the case that the above-described various wireless network technologies are developed and embodied, an issue of compatibility among at least two different wireless networks is raised. Namely, technology providing an individual mobile station with Internet protocol (IP) address for compatibility among different wireless systems, which is entitled as All-IP technology, is limited. Also, various related technology issues such as development of the Internet protocol version 6 (IPv6) for enlarging an address resource under the All-IP technology, a neighbor network discovery technology under the IPv6, and an improved technology of a mobility service including a handover under the IPv6 are proposed. Particularly, the neighbor network discovery method of the mobile station (MS) which is located in at least two different wireless networks in the All-IP environment is problematic. As an example, a neighbor network discovery technology may be required to determine which wireless networks in the heterogeneous wireless network environment including a WiFi network, a WiMAX network, and a CDMA 2000 network that the MS will access to and perform a handover with.

As described above, studies to discover a capability and configuration information with respect to the neighbor network have been advancing. The study includes a solution of using a media access control (MAC) layer design. However, the design may provide only a portion of information which is necessary for simplifying the entire discovery. Also, as an example, an IEEE 802.11k solution for the WLAN may not be generally applied to the different wireless network systems except for an IEEE 802.11 link. Also, the solution through the MAC layer design may not be easily applied to a legacy network. Similarly, a portion of information about the neighbor network may be obtained by operations of a few particular protocols. For example, a portion of information about the neighbor network may be obtained by using a protocol like a proxy router discovery. In this instance, the proxy router is used in a mobile IPv6 fast handover. However, the method using the proxy router also has a restricted applicability. Also, the method using the proxy router may not satisfy needs such as applicability to the All-IP environment, a discovery of all neighbor networks around the MS, and an extensive learning about capability/configuration information of the neighbor network in the MS.

Currently, the IEEE 802.21 Working Group has made various proposals for inter-operability among different wireless networks, such as supporting of a fast handover in the All-IP environment. However, the IEEE 802.21 Working Group may not have proposed a technical solution to the questions: in which way does the MS request the neighbor network discovery; which entity responds to a request for the neighbor network discovery; and, in which message format is a corresponding request and reply transceived. WO01/092315 A1 discloses a method for discovering neighbor networks where the request message includes MAC address information of a farget neighbor network.

Accordingly, a method for discovering neighbor networks in the MS and a system for enabling the method which are available in a next generation network system that the All-IP technology will be commonly included in, is provided.

### Disclosure of Invention

### Technical Goals

The present invention provides a method for discovering neighbor networks in a mobile station (MS) and a network system for enabling the method, which optimizes a handover of the MS in at least two different wireless network environments.

The present invention also provides a method for discovering neighbor networks in the MS, which is easily applicable to a legacy network by using a general dynamic host configuration protocol (DHCP).

The present invention also provides a method for discovering neighbor networks in the MS and a network system for enabling the method, which provides the MS with information elements with respect to the neighbor networks by using a media independent handover (MIH) information service (IS) which is proposed by the IEEE 802.21 Working Group.

The present invention also provides a specific solution and a transmission message format for a handover among different wireless networks under discussion in the IEEE 802.21 Working Group.

### Technical solutions

According to an aspect of the present invention, there is provided a network management server as defined by claim 1.

According to another aspect of the present invention, there provided are methods of discovering a neighbor network as defined by claims 9 and 19 and computer-realable recording media as defined by claims 18 and 21.

### Brief Description of Drawings

FIG. 1 is a block diagram illustrating an outline of a network including a network management server and a mobile station (MS) in a wireless network system including at least two different networks according to the present invention;
FIG. 2 is a flowchart illustrating an example of a method of discovering neighbor networks according to an embodiment of the present invention;
FIG. 3 is a diagram illustrating an example of a request message for capability/configuration information to request the capability/configuration information of the neighbor network from a mobile station to a network management server according to an embodiment of the present invention;
FIG. 4 is a diagram illustrating an example of a capability/configuration information reply message to transmit the capability/configuration information of the neighbor network from a network management server to a mobile station according to an embodiment of the present invention; and
FIG. 5 is a diagram illustrating an example of an IEEE 802.21 frame format including a request message for capability/configuration information and a capability/configuration information reply message which are illustrated in FIGS. 3 and 4 according to an embodiment of the present invention.

### Best Mode for Carrying Out the Invention

A mobile station (MS) as used in the present specification includes mobile communication devices, such as a Personal Digital Cellular (PDC) phone, a personal communication service (PCS) phone, a personal handyphone system (PHS) phone, a Code Division Multiple Access (CDMA)-2000 (1X, 3X) phone, a Wideband CDMA phone, a dual band/dual mode phone, a Global System for Mobile Communications (GSM) phone, a mobile broadband system (MBS) phone, a Digital Multimedia Broadcasting (DMB) phone, a smart phone, an orthogonal frequency division multiplexing (OFDM) phone, and an orthogonal frequency division multiple access (OFDMA) phone; portable terminals such as a personal digital assistant (PDA), a hand-held PC, a notebook PC, a laptop computer, a wireless broadband Internet (WiBro) terminal, an MP3 player, and a mini disc (MD) player; and all types of hand-held based wireless communication devices including an International Mobile Telecommunication (IMT)-2000 providing international roaming service and extended mobile communication service. Also, the portable device may include a predetermined communication module such as an orthogonal frequency division multiplexing access (OFDMA) module, a CDMA module, a Bluetooth module, an Infrared Data Association (IrDA) module, a wired/wireless LAN card and a wireless communication device which is provided with a global positioning system (GPS) chip enabling tracking of a position via a GPS. Also, the portable device may include a microprocessor which can play multimedia and perform a certain calculation operation.

Also, a neighbor network indicates a wireless network which is located around the wireless network where the MS currently is located.

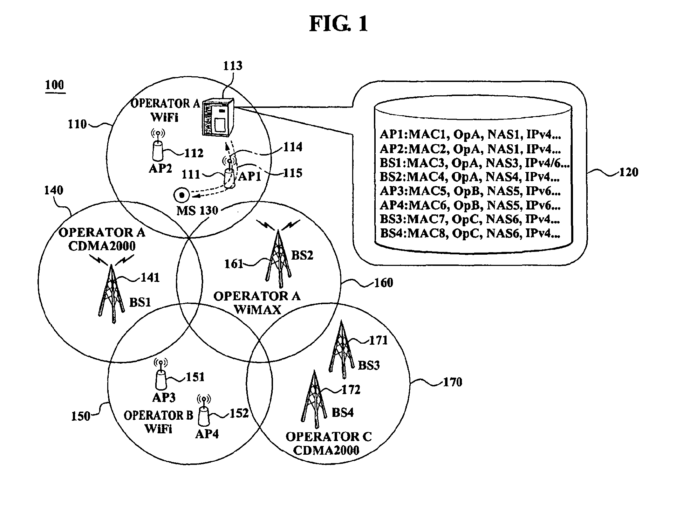

FIG. 1 is a block diagram illustrating an outline of a network including a network management server and a mobile station (MS) in a wireless network system including at least two different networks according to the present invention.

A block diagram illustrated in FIG. 1 illustrates an embodiment of a wireless network system. The wireless network system proactively discovers capability/configuration information of a candidate neighbor network among neighbors of the MS according to the present invention. The wireless network system includes at least two different networks. In this instance, the wireless network system may include at least one of an IEEE 802.11a/11b/11g network, i.e. a WiFi network, a wireless local area network (WLAN), a metropolitan area network (MAN) such as a worldwide interoperability for microwave access (WiMAX), a wireless personal area network (WPAN), a general packet radio services (GPRS) network, a Global System for Mobile communication (GSM) network, a code division multiple access (CDMA) network such as CDMA 2000, a Bluetooth network, and other wireless networks. FIG. 1 illustrates an example of a wireless network system including two WiFi networks, a WiMAX network, and two CDMA 2000 networks from among the above wireless network systems.

As illustrated in FIG. 1, a wireless network system 100 includes a plurality of mobile networks which are operated by a plurality of network operators. Such mobile networks include a WiFi network 110, a CDMA 2000 network 140, and a WiMAX network 160 which are operated by an operator A. Also, such mobile networks include a WiFi network 150 which is operated by an operator B, and a CDMA 2000 network 170 which is operated by an operator C. Such mobile networks 110, 140, 150, 160, and 170 respectively include at least one access point (AP) or a base station (BS) to provide a MS 130 with a predetermined mobile service, and a network management server, for example, a dynamic host configuration protocol (DHCP) server, providing host configuration information with respect to the MS 130 which is located in a corresponding mobile network. A network management server 113 may be connected via an access point (AP), an access router (AR), or a dedicated server for an access network. Also, the WiFi network 110 illustrated in FIG. 1 includes a first access point AP1 111, a second access point AP2 112, and the network management server 113. The network management server 113 is connected with a neighborhood (NH) database 120. In this instance, a location of the NH database 120 may be in the same physical location as the network management server 113. Also, the NH database 120 may be a separate entity which is located in a remote location, connected via a predetermined wire/wireless network.

Also, the CDMA 2000 network 140 illustrated in FIG. 1 includes a first base station BS1 141. The WiFi network 150 includes a third access point AP3 151 and a fourth access point AP4 152. The WiMAX network 160 includes a second base station BS2 161. The CDMA network 170 includes a third base station BS3 171 and a fourth base station BS4 172. Each of the networks 140 through 170 further includes a respective network management server.

The MS 130 communicates with the network management server 113 via the first access point AP 1 111 as shown in routes 114 and 115. A description of the routes 114 and 115 will be described later. The NH database 120 of the network management server 113 includes a plurality of information fields with respect to a respective access point or a respective base station. In this instance, the access point or the base station is the access point or the base station of the WiFi network 150 and at least one neighbor network 140 through 170 which are located around the WiFi network. Examples of the information fields include a media access control (MAC) address, an operator identifier, a network access server (NAS) identifier, Internet protocol identifier information such as an IPv4/6, and etc. Also, an information element (IE) as the capability/configuration information includes a network type, a radio type, a roaming partner list, compatibility information of IPv4/IPv6, security, quality of service (QoS) level information of each network, current load information for each neighbor network, a geographical location, a pre-authentication function, a pricing plan, a location based service (LBS) list, information on supporting virtual private network (VPN), a physical layer type, and a channel parameter. In this instance, the capability/configuration information may be recorded in the NH database 120. Such information elements may be manually inputted by a network operator. Also, variable information elements which can be updated in real time may be automatically inputted by a separate network management system.

Access points 111, 112, 151, and 152, and base stations 141, 161, 171, and 172 in the wireless network generally transmit and receive data to connect users in the respective wireless network. Also, the access points 111, 112, 151, and 152, and the base stations 141, 161, 171, and 172 in the wireless network function as a mutual connection point between the wireless network and a wired network. Namely, the MS 130 which may be called as a user terminal or an end terminal may access to a corresponding wireless network via the access points 111, 112, 151, and 152 and the base stations 141, 161, 171, and 172. Also, the MS 130 may be provided with a predetermined service which is provided from the corresponding wireless network.

The network management server 113 illustrated in FIG. 1 may be a DHCP server. The DHCP server allocates an IP address to a particular DHCP client through operations of 1) Discover, 2) Offer, 3) Request, and 4) ACK. The DHCP server maintains a database. In this instance, the database records information such as an allocatable IP address, a lease duration of an allocated IP address, a domain name system (DNS), a default gateway, a Windows Internet naming service (WINS), and the like. The network management server 113 according to the present invention is embodied using the DHCP server. Also, the network management server 113 according to the present invention records the information described above with respect to the neighbor networks in the NH database 120, and provides the MS 130 with the information. Unique IP addresses are allocated to all IP terminals including the MS 130 according to the DHCP which is a general protocol. Accordingly, in operations 3) Request and 4) ACK according to the DHCP, neighbor networks around the MS 130 may be discovered by requesting the capability/configuration information of the neighbor network and receiving a reply with respect to the request.

Also, the network management server 113 includes a communication interface and a database management unit, which are not shown. In this instance, the communication interface receives a request message for the capability/configuration information of the neighbor network from the MS which is connected via a predetermined access point or the base station. Also, the database management unit extracts the capability/configuration information of the neighbor network which is included in the request message by referring to the NH database, and controls a reply message including the capability/configuration information to be transmitted to the MS via the communication interface.

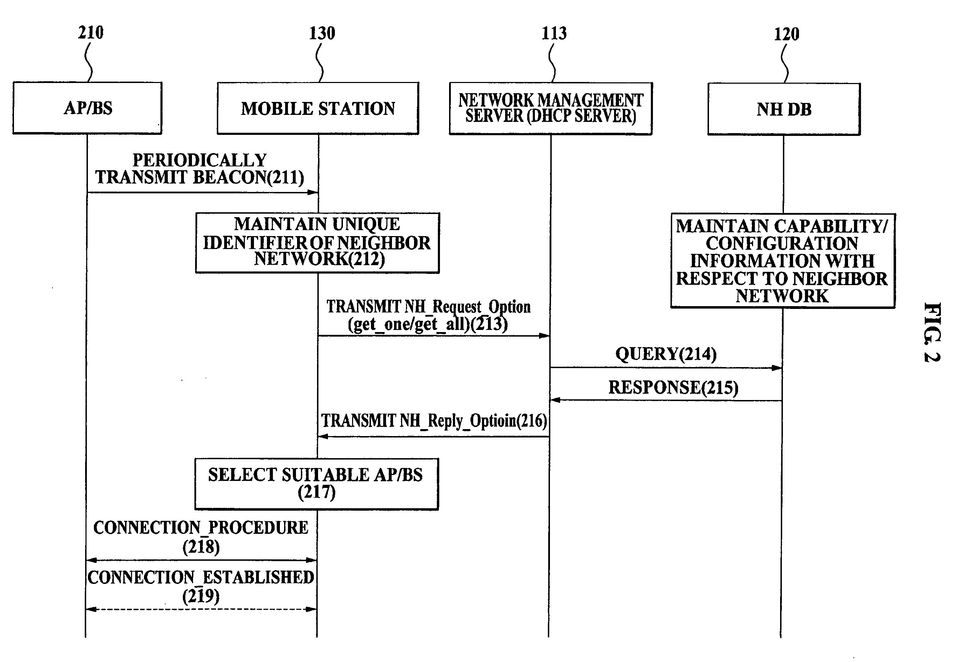

FIG. 2 is a flowchart illustrating an example of a method of discovering neighbor networks according to an embodiment of the present invention.

Referring to the FIG. 2, the method of discovering neighbor networks according to an embodiment of the present invention is performed among an access point/base station (AP/BS) 210, an MS 130, a network management server 113, and an NH database 120.

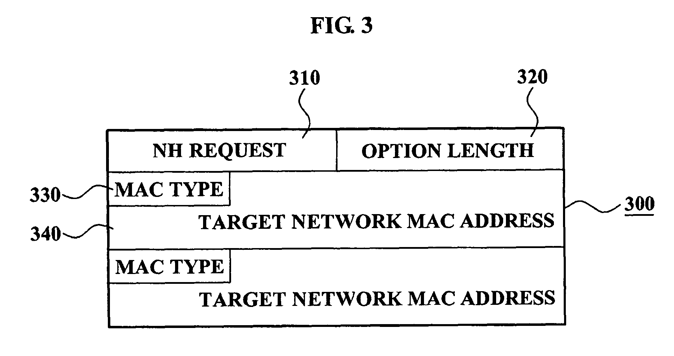

In operation 211, the AP/BS 210 periodically transmits a beacon to the MS 130. In this instance, the MS 130 is located in the neighbor network of a corresponding wireless network. In operation 212, a unique identifier of a corresponding AP/BS 210 such as a MAC address information is included in the beacon. Also, the MS 130, which received the beacon, records and maintains the unique identifier of the AP/BS 210 of the neighbor network in a predetermined recording medium. In operation 213, the MS 130 transmits a request message for capability/configuration information with respect to the neighbor network (i.e. NH_Request_Option) to the network management server 113 via the access point or the base station of the wireless network where the MS 130 is currently located. FIG. 3 illustrates an example of the request message for capability/configuration information which the MS 130 transmits to the network management server 113 in operation 213.

FIG. 3 is a diagram illustrating an example of a request message for capability/configuration information to request the capability/configuration information of the neighbor network from a MS to a network management server according to an embodiment of the present invention.

The request message for capability/configuration information 300 illustrated in FIG. 3 includes a neighborhood (NH) Request 310 and an option length 320. The NH Request 310 indicates a type of a DHCP request. The option length 320 indicates a size of an option such as a byte. The NH Request 310 and the option length 320 may follow a standard DHCP option format which is stated in a DHCP reference. A MAC type 330 and a target network MAC address 340 field are selectively added. In this instance, the MAC type 330 includes information about a size and a format of the subsequent target network MAC address 340. Also, the target network MAC address 340 may be a MAC address of the access point or the base station of a particular wireless network. In this instance, the particular wireless network indicates the wireless network which the MS 130 requests from the network management server 113. The MAC address is information which is obtained by receiving the beacon from the MS. In this instance, the beacon is periodically transmitted to the access point of the neighbor network or the base station.

When the MAC type 330 and the target network MAC address 340 illustrated in FIG. 3 are not included in the request message for capability/configuration information 300, it indicates that the MS 130 requests capability/configuration information with respect to all neighbor networks to the network management server 113 (i.e. get_all). Also, when the MAC type 330 and the target network MAC address 340 illustrated in FIG. 3 are included, it indicates that the MS 130 requests capability/configuration information with respect to at least one particular neighbor network to the network management server 113 (get_one) (i.e. get_one).

Referring again to FIG. 2, in operation 214, the network management server 113 which received the request message for capability/configuration information (NH_Request_Option) illustrated in FIG. 3 from the MS 130 transmits a predetermined query to the NH database according to the request message for capability/configuration information (NH_Request_Option). When the MS 130 requests capability/configuration information (NH_Request_Option) with respect to all neighbor networks to the network management server 113, the query requests the capability/configuration information (NH_Request_Option) with respect to all neighbor networks around the MS 130 based on the request message for capability/configuration information (NH_Request_Option). When the MS 130 requests capability/configuration information (NH_Request_Option) with respect to at least one particular neighbor network from the network management server 113, the query requests the capability/configuration information with respect to a particular neighbor network around the MS 130 based on the request message for capability/configuration information (NH_Request_Option).

In operation 215, the NH database 120 extracts the capability/configuration information (NH_Request_Option) of the neighbor network by parsing a database field, and transmits the capability/configuration information as a reply to the network management server 113.

In operation 216, the network management server 113 transmits a capability/configuration information reply message (i.e. NH_Reply_Option) to the MS 130. In this instance, the capability/configuration information reply message includes the capability/configuration information (NH_Request_Option) of the neighbor network which is included in the query.

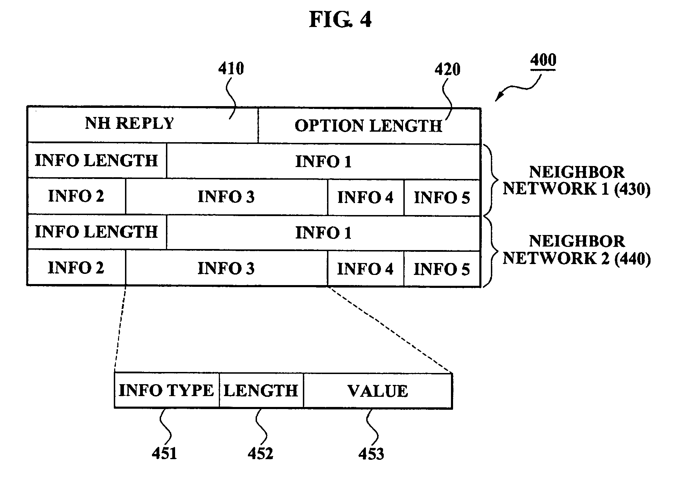

FIG. 4 is a diagram illustrating an example of a capability/configuration information reply message (NH_Reply_Option) to transmit the capability/configuration information of the neighbor network from a network management server to a MS according to an embodiment of the present invention.

The capability/configuration information reply message 400 illustrated in FIG. 4 includes a NH Reply 410 and an option length 420. The NH Reply 410 indicates a type of a DHCP reply. The option length 420 indicates a size of an option such as a byte. The NH Reply 410 and the option length 420 may follow a standard DHCP option format which is stated in a DHCP reference, which is same as FIG. 3. An information set with respect to a neighbor network 1 includes a length of information (info length) included in the information set 430. Also, the information set with respect to the neighbor network 1 430 includes information 1 (info 1) through information 5 (info5) which are information element with respect to the neighbor network 1. Also, an information set with respect to a neighbor network 2 includes a length of information (info length) included in the information set 440. Also, the information set 440 with respect to the neighbor network 2 includes information 1 (info 1) through information 5 (info5) which are information element with respect to the neighbor network 2. Referring to FIG. 4, a configuration with respect to information 3 (info 3) which is included in the information sets 430 and 440 is illustrated in detail. The information 3 includes a corresponding information element type 451, a corresponding information element length 452, and a corresponding information element value 453 fields.

FIG. 4 illustrates when a number of the target network included in the request message for capability/configuration information (NH_Request_Option) which was transmitted in operation 213 in FIG. 2 is two or when a number of the neighbor network recorded in the NH database 120 is two. When the number of the target network where the MS 130 requests the capability/configuration information is increased or the number of the neighbor network recorded in the NH database 120 is great, a number of the information sets 430 and 440 may be increased. Also, the information fields included in the information sets 430 and 440 include five information fields in FIG. 4. However, a number of the information field may vary.

Referring again to FIG. 2, in operation 216, the capability/configuration information reply message (NH_Reply_Option) illustrated in FIG. 4 is transmitted to the MS 130. Also, in operation 217, the MS 130 which received the capability/configuration information reply message (NH_Reply_Option) selects a suitable neighbor network based on information of the neighbor network which is included in the capability/configuration information reply message (NH_Reply_Option). In operation 218, the MS 130 performs an connection procedure such as a 3-way handshake with the access point or the base station of a target neighbor network. In operation 219, the MS 130 may access the corresponding neighbor network through the access procedure, and use a mobile communication service via the neighbor network. When an access to a new neighbor network in the MS 130 is desired and is located in a mobile environment, the method of discovering the neighbor network illustrated in FIG. 2 may be used in a handover process to be provided in a seamless service.

The method of discovering the neighbor network illustrated in FIG. 2 may be applied as follows:
1) In a Wibro fast handoff, in order to use an identical pairwise master key (PMK), the MS 130 should know whether a predetermined base station is controlled by a predetermined network access server (NAS). In this instance, the Wibro indicates one wireless Internet standard which is defined in IEEE 802.16. The MS 130 may obtain an NAS identification (ID) from the network management server 113 prior to the 3-way handshake with the target base station by the method of discovering the neighbor network according to the present invention.
2) Before the MS 130 completes a handover to a target WiFi network, the MS 130 may obtain the NAS ID of a corresponding target WiFi network from the network management server 113. Accordingly, the MS 130 may conduct a pre-authentication.
3) The MS 130 may discover the base stations which are connected with an IP subnet. In this instance, the IP subnet is identical to an IP subnet of the network where the MS 130 is currently located. When attached to any one of the base stations, the MS 130 may easily ascertain that a current IP configuration is valid.
4) Channel information of a target access point of the capability/configuration information of the neighbor network which is obtained by the method of discovering the neighbor network according to the present invention is learned. Accordingly, the MS 130 may reduce continuous radio scanning. Also, a battery performance of the MS 130 may be increased.
5) The MS 130 may learn(a target foreign agent (FA) or an access router (AR) in advance. Accordingly, the MS 130 may request a bi-casting before completes a handover to the target network. The bi-casting relates to a semi-soft handover that communicating a previous point of attachment (POA) and that a new POA is needed.

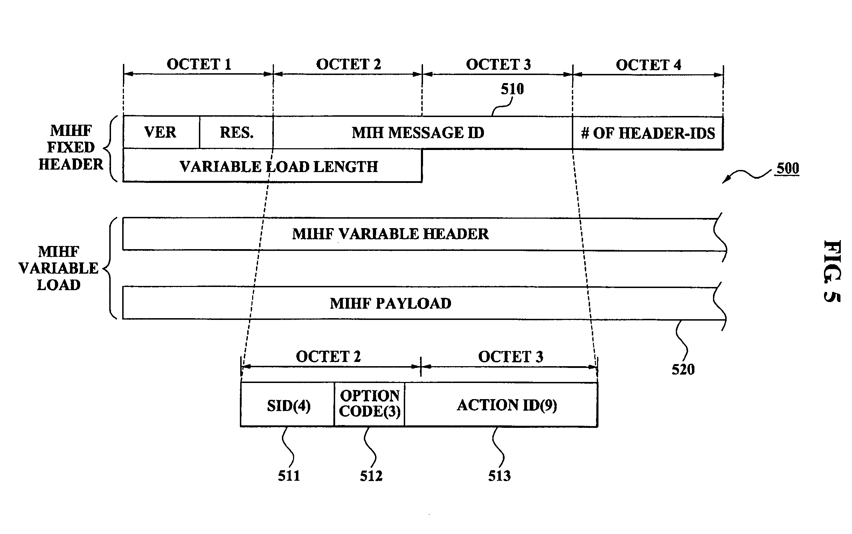

Also, in order to embody the method of discovering the neighbor network according to the present invention, the request message for capability/configuration information (NH_Request_Option) and the capability/configuration information reply message (NH_Reply_Option) may be transmitted and/or received by using a media independent handover function (MIHF) frame. The MIHF frame is discussed in IEEE 802.21 Working Group (WG). A frame format for a request/reply of the information element with respect to the neighbor network by using the MIHF frame will be described in detail with reference to FIG. 5.

FIG. 5 is a diagram illustrating an example of an IEEE 802.21 frame format including a request message for capability/configuration information and a capability/configuration information reply message which are illustrated in FIGS. 3 and 4 according to an embodiment of the present invention.

The IEEE 802.21 MIHF frame under discussion includes an MIHF fixed header of six bytes in total and an MIHF variable load having an undefined size. In this instance, the request message for capability/configuration information and the capability/configuration information reply message according to the present invention may be included in a media independent handover (MIH) message ID 510 field which occupies two bytes of the MIHF fixed header and a MIHF payload 520 of the MIHF variable load.

The MIH message ID 510 illustrated in FIG. 5 may include a four-bit service ID (SID) 511, a three-bit option code 512, and a nine-bit action ID 513. A service identifier which provides an information element of the neighbor network according to the present invention is inputted in the SID 511. Information about an NH Request 310 illustrated in FIG. 3 and an NH Reply 410 illustrated in FIG. 4 are inputted in the option code 512. Information corresponding to option lengths 320 and 420 in FIGS. 3 and 4 are inputted in the action ID 513. Also, when the IEEE 802.21 MIHF frame in FIG. 5 is the request message for capability/configuration information (NH_Request_Option), a MAC type 330 of a target network and a MAC address 340 of the target network illustrated in FIG. 3 may be included in the MIHF payload 520 of the MIHF variable load. Also, when the IEEE 802.21 MIHF frame in FIG. 5 is the capability/configuration information reply message (NH_Reply_Option), an information set of the neighbor network 1 or 2 430 or 440 illustrated in FIG. 4 may be included in the MIHF payload 520 of the MIHF variable Load.

As described above, in order to obtain the capability/configuration information of the neighbor network, the DHCP which is generally used in current IP networks is utilized. Also, the IEEE 802.21 MIHF frame including a request and reply of configuration information which are required by a standard DHCP are transmitted. Accordingly, the MS 130 in the All-IP environment may obtain the capability/configuration information of neighboring neighbor networks.

The method for discovering neighbor networks in the MS and a network system for enabling the method according to the above-described embodiment of the present invention may be recorded in computer-readable media including program instructions to implement various operations embodied by a computer. The media may also include, alone or in combination with the program instructions, data files, data structures, and the like. The media and program instructions may be those specially designed and constructed for the purposes of the present invention, or they may be of the kind well-known and available to those having skill in the computer software arts. Examples of computer-readable media include magnetic media such as hard disks, floppy disks, and magnetic media such as magnetic tape; optical media such as CD ROM disks and DVD; magneto-optical media such as optical disks; and hardware devices that are specially configured to store and perform program instructions, such as read-only memory (ROM), random access memory (RAM), flash memory, and the like. The media may also be a transmission medium such as optical or metallic lines, wave guides, etc. including a carrier wave transmitting signals specifying the program instructions, data structures, etc. Examples of program instructions include both machine code, such as produced by a compiler, and files containing higher level code that may be executed by the computer using an interpreter. The described hardware devices may be configured to act as one or more software modules in order to perform the operations of the above-described embodiments of the present invention.

### Industrial Applicability

According to the present invention, a handover of an MS in at least two different wireless network environments may be optimized.

Also, according to the present invention, a method for discovering neighbor networks in the MS which is easily applicable to a legacy network is provided by using a general DHCP.

Also, according to the present invention, information elements about neighbor networks may be provided to a MS by using a media independent handover (MIH) information service (IS) which is proposed by the IEEE 802.21 Working Group.

Also, according to the present invention, a specific solution and a transmission message format for a handover among different wireless networks under discussion in the IEEE 802.21 Working Group is provided.

## Claims

1. A network management server (113) of a wireless network system, the server comprising:
a neighborhood database (120) maintaining configuration information with respect to at least one neighbor network;
a communication interface receiving a request message (300) for capability/configuration information of the neighbor network from a mobile station which is connected via a predetermined access point or a base station, wherein the request message comprises a service identifier (310), and an option length (320) and selectively includes media (320) access control, MAC, address information (330, 340) of a target neighbor network; and
a database management unit extracting the capability/configuration information of the neighbor network which is included in the request message by referring to the neighborhood database, and controlling a reply message (400) including the capability/configuration information to be transmitted to the mobile station via the communication interface, wherein the reply message comprises the service identifier (410) and the option length (420) and the reply message includes:
1) the capability/configuration information (430, 440) of the neighbor network, when the MAC address information of the target neighbor network is included in the request message, and
2) the capability/configuration information (430, 440) of all networks which are recorded in the neighborhood database, when the MAC address information of the target neighbor network is not included in the request message.

2. The server of claim 1, wherein the network management server is a dynamic host configuration protocol, DHCP, server.

3. The server of claim 1, wherein the request message is in a format of a media independent handover function, MIHF, frame according to IEEE 802.21, and comprises a media independent handove, MIH, identifier field comprising a service identifier and an option length and an MIHF payload field selectively including MAC address information of a target neighbor network.

4. The server of claim 1, wherein the reply message is in a format of a media independent handover function, MIHF, frame according to IEEE 802.21, and comprises a media independent handover, MIH, identifier field comprising a service identifier and an option length and the MIHF payload field including the capability/configuration information of a target neighbor network.

5. The server of claim 4, wherein the capability/configuration information of the target neighbor network included in the MIHF payload field includes the capability/configuration information with respect to all neighbor networks which are recorded in the neighborhood database or a particular target neighbor network which included in the request message.

6. The server of claim 1, wherein the network management server is located for each wireless network of the wireless network system.

7. The server of claim 1, wherein the capability/configuration information comprises at least one of the access point of the neighbor network or a MAC address of the base station, an operator identifier, a network access server, NAS, identifier, IP identifier information, network type, IP version 4/6 , IPv4/6, a radio type, a roaming partner list, compatibility information of IPv4/IPv6, security, quality of service, QoS, level information of each network, current load information for each neighbor network, a geographical location, a pre-authentication function, a pricing plan, a location based service LBS list, information of supporting virtual private network, VPN, a physical layer type, and a channel parameter.

8. The server of claim 1, wherein the wireless network system is an all internet protocol.

9. A method of discovering a neighbor network, the method comprising:
receiving beacon information from the neighbor network, and identifying the neighbor network by using the beacon information;
transmitting (213) a request message (300) for capability/configuration information of the neighbor network to a predetermined network management server via an access point or a base station, wherein the request message comprises a service identifier (310) and an option length (320), and selectively includes media access control, MAC, address information of a target neighbor network; and
receiving a reply message (400) including the capability/configuration information with respect to the neighbor network from the network management server, wherein the reply message comprises the service identifier (410) and the option lengh (420), and the reply (420) message further includes:
1) the capability/configuration information (430, 440) of the neighbor network, when the MAC address information of the target neighbor network is included in the request message, and
2) the capability/configuration information (430, 440) of all networks which are recorded in the neighborhood database, when the MAC address information of the target neighbor network is not included in the request message.

10. The method of claim 9, wherein the beacon information comprises the access point or a MAC address of the base station.

11. The method of claim 9, wherein the network management server is a dynamic host configuration protocol, DHCP, server.

12. The method of claim 9 , wherein the request message is in a format of a media independent handover function, MIHF, frame according to IEEE 802.21, and comprises a media independent handover ,MIH, identifier field comprising a service identifier and an option length, and an MIHF payload field selectively including MAC address information of a target neighbor network.

13. The method of claim 9 , wherein the reply message has the media independent handover function MIHF, frame format according to the IEEE 802.21, and comprises the media independent handover MIH, identifier field comprising the service identifier and the option length, and the MIHF payload field including the capability/configuration information of the target neighbor network.

14. The method of claim 13, wherein the capability/configuration information of the target neighbor network included in the MIHF payload field includes the capability/configuration information with respect to all neighbor networks which are recorded in the neighborhood database or in a particular target neighbor network which is included in the request message.

15. The method of claim 9, wherein the network management server is installed for each wireless network of the wireless network system.

16. The method of claim 9, wherein the capability/configuration information comprises at least one of the access point of the neighbor network or a MAC address of the base station, an operator identifier, a network access server, NAS, identifier, IP identifier information, network type, an IP version 4/6 IPv4/6, a radio type, a roaming partner list, compatibility information of IPv4/IPv6, security, quality of service ,QoS, level information of each network, current load information for each neighbor network, a geographical location, a pre-authentication function, a pricing plan, a location based service ,LBS list, information of supporting virtual private network, VPN, a physical layer type, and a channel parameter.

17. The method of claim 9, the method further comprising:
analyzing the capability/configuration information of the neighbor network which is included in the reply message;
selecting the neighbor network which will connect based on a result of the analysis; and
connecting the selected neighbor network.

18. A computer-readable recording medium storing a program for implementing a neighbor network discovery method, the method comprising:
receiving beacon information from the neighbor network, and identifying the neighbor network by using the beacon information;
transmitting (213) a request message (300) for capability/configuration information of the neighbor network to a predetermined network management server via an access point or a base station, wherein the request message comprises a service identifier (310) and an option length (320) and selectively includes media access control, MAC, address information of a target neighbor network; and
receiving a reply message (400) including the capability/configuration information with respect to the neighbor network from the network management server, wherein the reply message comprises the service identifier (410) and the option length (420) and the reply message further includes:
1) the capability/configuration information (430,440) of the neighbor network, when the MAC address information of the target neighbor network is included in the request message, and
2) the capability/configuration information (430,440) of all networks which are recorded in the neighborhood database, when the MAC address information of the target neighbor network is not included in the request message.

19. A method of providing neighbor network information, the method comprising:
maintaining a neighborhood database (120) recording capability/configuration information with respect to at least one neighbor network which is located around a network management server (113).
receiving a request message (300) for the capability/configuration information of the neighbor network from a mobile station which is connected via a predetermined access point or a base station, wherein the request message comprises a service identifier (310) and an option length (320) and selectively includes media access control, MAC, address information of a target neighbor network; and
extracting the capability/configuration information of the neighbor network which is included in the request message (300) by referring to the neighborhood database (120), and transmitting (216) a reply message (400) including the capability/configuration information to the mobile station, wherein the reply message comprises the service identifier (410) and the option length (420), and the reply message further includes:
1) the capability/configuration information (430,440) of the neighbor network, when the MAC address information of the target neighbor network is included in the request message, and
2) the capability/configuration information (430,440) of all networks which are recorded in the neighborhood database, when the MAC address information of the target neighbor network is not included in the request message.

20. The method of claim 19, wherein the network management server is a dynamic host configuration protocol, DHCP, server.

21. A computer-readable recording medium storing a program for implementing a method of providing neighbor network information, the method comprising:
maintaining a neighborhood database (120) recording capability/configuration information with respect to at least one neighbor network which is located around a network management server (113).
receiving a request message (300) for the capability/configuration information of the neighbor network from a mobile station which is connected via a predetermined access point or a base station, wherein the request message comprises a service identifier (310) and an option length (320), and selectively includes media access control, MAC, address information of a target neighbor network; and
extracting the capability/configuration information of the neighbor network which is included in the request message (300) by referring to the neighborhood database (120) and transmitting (216) a reply message (400) including the capability/configuration information to the mobile station, wherein the reply message comprises the service identifier (410) and the option length (420), and the reply message further includes:
1) the capability/configuration information (430,440) of the neighbor network, when the MAC address information of the target neighbor network is included in the request message, and
2) the capability/configuration information (430,440) of all networks which are recorded in the neighborhood database, when the MAC address information of the target neighbor network is not included in the request message.

## Patentansprüche

1. Netzwerkverwaltungs-Server (113) eines Drahtlos-Netzwerksystems, wobei der Server umfasst:
eine Nachbarschafts-Datenbank (120), die Konfigurationsinformationen in Bezug auf wenigstens ein Nachbar-Netzwerk führt;
eine Kommunikationsschnittstelle, die eine Nachricht (300) zum Anfordern von Fähigkeits-/Konfigurations-Informationen des Nachbar-Netzwerks von einer Mobilstation empfängt, die über einen vorgegebenen Zugangspunkt oder eine Basisstation verbunden ist, wobei die Anforderungs-Nachricht eine Dienst-Kennung (310) sowie eine Options-Länge (320) umfasst und selektiv eine MAC-Adressinformation (330, 340) eines Ziel-Nachbar-Netzwerks enthält; und
eine Datenbankverwaltungs-Einheit, die die Fähigkeits-/Konfigurations-Informationen des Nachbar-Netzwerks extrahiert, die in der Anforderungs-Nachricht enthalten sind, indem sie auf die Nachbarschafts-Datenbank Bezug nimmt, und die eine Antwort-Nachricht (400), die die Fähigkeits-/Konfigurationsinformationen enthält, so steuert, dass sie über die Kommunikationsschnittstelle zu der Mobilstation übertragen wird, wobei die Antwort-Nachricht die Dienst-Kennung (410) sowie die Options-Länge (420) umfasst und die Antwort-Nachricht enthält:
1) die Fähigkeits-/Konfigurationsinformationen (430, 440) des Nachbar-Netzwerks, wenn die MAC-Adressinformation des Ziel-Nachbar-Netzwerks in der Anforderungs-Nachricht enthalten ist, und
2) die Fähigkeits-/Konfigurationsinformationen (430, 440) aller Netzwerke, die in der Nachbarschafts-Datenbank verzeichnet sind, wenn die MAC-Adressinformation des Ziel-Nachbarschafts-Netzwerks nicht in der Anforderungs-Nachricht enthalten ist.

2. Server nach Anspruch 1, wobei der Netzwerkverwaltungs-Server ein DHCP-Server (dynamic host configuration protocol server) ist.

3. Server nach Anspruch 1, wobei die Anforderungs-Nachricht in einem Format eines MIHF-Frame (media independent handover function frame) gemäß IEEE 802.21 vorliegt und ein MIH-Kennungsfeld (media independent handover identifier field), das eine Dienst-Kennung und eine Options-Länge umfasst, sowie ein MIHF-Nutzdatenfeld umfasst, das selektiv die MAC-Adressinformation eines Ziel-Nachbar-Netzwerks enthält.

4. Server nach Anspruch 1, wobei die Antwort-Nachricht in einem Format eines MIHF-Frame gemäß IEEE 802.21 vorliegt und ein MIH-Kennungsfeld, das eine Dienst-Kennung und eine Options-Länge umfasst, sowie ein MIHF-Nutzdatenfeld umfasst, das die Fähigkeits-/Konfigurationsinformationen eines Ziel-Nachbar-Netzwerks enthält.

5. Server nach Anspruch 4, wobei die Fähigkeits-/Konfigurationsinformationen des Ziel-Nachbar-Netzwerks, die in dem MIHF-Nutzdatenfeld enthalten sind, die Fähigkeits-/Konfigurationsinformationen bezüglich aller Nachbar-Netzwerke, die in der Nachbarschafts-Datenbank verzeichnet sind, oder eines bestimmten Ziel-Nachbar-Netzwerks enthalten, das in der Anforderungs-Nachricht enthalten ist.

6. Server nach Anspruch 1, wobei der Netzwerkverwaltungs-Server für jedes Drahtlos-Netzwerk des Systems von Drahtlos-Netzwerken vorhanden ist.

7. Server nach Anspruch 1, wobei die Fähigkeits-/Konfigurationsinformationen wenigstens den Zugangspunkt des Nachbar-Netzwerks oder eine MAC-Adresse der Basisstation, eine Betreiber-Kennung, eine NAS-Kennung (network access server identifier), IP-Kennungsinformationen, Netzwerk-Typ, IP-Version 4/6, einen Funk-Typ, eine Liste von Roaming-Partnern, Kompatibilitätsinformationen bezüglich IPv4/IPv6, Sicherheit, Dienstqualitätsniveau-Informationen jedes Netzwerks, Informationen über die aktuelle Last für jedes Nachbar-Netzwerk, einen geografischen Standort, eine Vor-Authentifizierungsfunktion, einen Tarifplan, eine LBS-Liste (location based service list), Informationen über die Unterstützung von VPN (virtual private network), einen Typ der physischen Schicht oder/und einen Kanalparameter umfassen.

8. Server nach Anspruch 1, wobei das System von Drahtlos-Netzwerken einem All-IP-Protokoll entspricht.

9. Verfahren zum Auffinden eines Nachbar-Netzwerks, wobei das Verfahren umfasst:
Empfangen von Beacon-Informationen von dem Nachbar-Netzwerk und Identifizieren des Nachbar-Netzwerks unter Verwendung der Beacon-Informationen;
Übertragen (213) einer Nachricht (300) zum Anfordern von Fähigkeits-/Konfigurations-informationen des Nachbar-Netzwerks zu einem vorgegebenen Netzwerkverwaltungs-Server über einen Zugangspunkt oder eine Basisstation, wobei die Anforderungs-Nachricht (310) eine Dienst-Kennung sowie eine Options-Länge (320) umfasst und selektiv eine MAC-Adressinformation eines Ziel-Nachbar-Netzwerks enthält; und
Empfangen einer Antwort-Nachricht (400), die die Fähigkeits-/Konfigurationsinformationen in Bezug auf das Nachbar-Netzwerk enthält, von dem Netzwerkverwaltungs-Server, wobei die Antwort-Nachricht die Dienst-Kennung (410) sowie die Options-Länge (420) umfasst und die Antwort-Nachricht des Weiteren enthält:
1) die Fähigkeits-/Konfigurationsinformationen (430, 440) des Nachbar-Netzwerks, wenn die MAC-Adressinformation des Ziel-Nachbar-Netzwerks in der Anforderungs-Nachricht enthalten ist, und
2) die Fähigkeits-/Konfigurationsinformationen (430, 440) aller Netzwerke, die in der Nachbarschafts-Datenbank verzeichnet sind, wenn die MAC-Adressinformation des Ziel-Nachbarschafts-Netzwerks nicht in der Anforderungs-Nachricht enthalten ist.

10. Verfahren nach Anspruch 9, wobei die Beacon-Information den Zugangspunkt oder eine MAC-Adresse der Basisstation umfasst.

11. Verfahren nach Anspruch 9, wobei der Netzwerkverwaltungs-Server ein DHCP-Server (dynamic host configuration protocol server) ist.

12. Verfahren nach Anspruch 9, wobei die Anforderungs-Nachricht in einem Format eines MIHF-Frame (media independent handover function frame) gemäß IEEE 802.21 vorliegt und ein MIH-Kennungsfeld (media independent handover identifier field), das eine Dienst-Kennung und eine Options-Länge umfasst, sowie ein MIHF-Nutzdatenfeld umfasst, das selektiv die MAC-Adressinformation eines Ziel-Nachbar-Netzwerks enthält.

13. Verfahren nach Anspruch 9, wobei die Antwort-Nachricht in einem Format eines MIHF-Frame gemäß IEEE 802.21 vorliegt und ein MIH-Kennungsfeld, das eine Dienst-Kennung und eine Options-Länge umfasst, sowie ein MIHF-Nutzdatenfeld umfasst, das die Fähigkeits-/Konfigurationsinformationen eines Ziel-Nachbar-Netzwerks enthält.

14. Verfahren nach Anspruch 13, wobei die Fähigkeits-/Konfigurationsinformationen des Ziel-Nachbar-Netzwerks, die in dem MIHF-Nutzdatenfeld enthalten sind, die Fähigkeits-/Konfigurationsinformationen bezüglich aller Nachbar-Netzwerke, die in der Nachbarschafts-Datenbank verzeichnet sind, oder eines bestimmten Ziel-Nachbar-Netzwerks enthalten, das in der Anforderungs-Nachricht enthalten ist.

15. Verfahren nach Anspruch 9, wobei der Netzwerkverwaltungs-Server für jedes Drahtlos-Netzwerk des Systems von Drahtlos-Netzwerken vorhanden ist.

16. Verfahren nach Anspruch 9, wobei die Fähigkeits-/Konfigurationsinformationen wenigstens den Zugangspunkt des Nachbar-Netzwerks oder eine MAC-Adresse der Basisstation, eine Betreiber-Kennung, eine NAS-Kennung (network access server identifier), IP-Kennungsinformationen, Netzwerk-Typ, IP-Version 4/6, einen Funk-Typ, eine Liste von Roaming-Partnern, Kompatibilitätsinformationen bezüglich IPv4/IPv6, Sicherheit, Dienstqualitätsniveau-Informationen jedes Netzwerks, Informationen über die aktuelle Last für jedes Nachbar-Netzwerk, einen geografischen Standort, eine Vor-Authentifizierungsfunktion, einen Tarifplan, eine LBS-Liste (location based service list), Informationen über die Unterstützung von VPN (virtual private network), einen Typ der physischen Schicht oder/und einen Kanalparameter umfassen.

17. Verfahren nach Anspruch 9, wobei das Verfahren des Weiteren umfasst:
Analysieren der Fähigkeits-/Konfigurationsinformationen des Nachbar-Netzwerks, die in der Antwort-Nachricht enthalten sind;
Auswählen des Nachbar-Netzwerks, das sich auf Basis eines Ergebnisses der Analyse verbindet; und
Verbinden des ausgewählten Nachbar-Netzwerks.

18. Computerlesbares Aufzeichnungsmedium, das ein Programm zum Implementieren eines Verfahrens zum Auffinden eines Nachbar-Netzwerks speichert, wobei das Verfahren umfasst:
Empfangen von Beacon-Informationen von dem Nachbar-Netzwerk und Identifizieren des Nachbar-Netzwerks unter Verwendung der Beacon-Informationen;
Übertragen (213) einer Nachricht (300) zum Anfordern von Fähigkeits-/Konfigurations-informationen des Nachbar-Netzwerks zu einem vorgegebenen Netzwerkverwaltungs-Server über einen Zugangspunkt oder eine Basisstation, wobei die Anforderungs-Nachricht (310) eine Dienst-Kennung sowie eine Options-Länge (320) umfasst und selektiv die MAC-Adressinformation eines Ziel-Nachbar-Netzwerks enthält; und
Empfangen einer Antwort-Nachricht (400), die die Fähigkeits-/Konfigurationsinformationen in Bezug auf das Nachbar-Netzwerk enthält, von dem Netzwerkverwaltungs-Server, wobei die Antwort-Nachricht die Dienst-Kennung (410) sowie die Options-Länge (420) umfasst und die Antwort-Nachricht des Weiteren enthält:
1) die Fähigkeits-/Konfigurationsinformationen (430, 440) des Nachbar-Netzwerks, wenn die MAC-Adressinformation des Ziel-Nachbar-Netzwerks in der Anforderungs-Nachricht enthalten ist, und
2) die Fähigkeits-/Konfigurationsinformationen (430, 440) aller Netzwerke, die in der Nachbarschafts-Datenbank verzeichnet sind, wenn die MAC-Adressinformation des Ziel-Nachbarschafts-Netzwerks nicht in der Anforderungs-Nachricht enthalten ist.

19. Verfahren zum Bereitstellen von Informationen über ein Nachbar-Netzwerk, wobei das Verfahren umfasst:
Führen einer Nachbarschafts-Datenbank (120), die Fähigkeits-/Konfigurationsinformationen bezüglich wenigstens eines Nachbar-Netzwerks aufzeichnet, das sich um einen Netzwerkverwaltungs-Server (113) herum befindet;
Empfangen einer Nachricht zum Anfordern der Fähigkeits-/Konfigurationsinformationen des Nachbar-Netzwerks von einer Mobilstation, die über einen vorgegebenen Zugangspunkt oder eine Basisstation verbunden ist, wobei die Anforderungs-Nachricht eine Dienst-Kennung (310) sowie eine Options-Länge (320) umfasst und selektiv eine MAC-Adressinformation eines Ziel-Nachbar-Netzwerks enthält; und
Extrahieren der Fähigkeits-/Konfigurationsinformationen des Nachbar-Netzwerks, die in der Anforderungs-Nachricht (300) enthalten sind, durch Bezugnahme auf die Nachbarschafts-Datenbank (120), und Übertragen (216) einer Antwort-Nachricht (400), die die Fähigkeits-/Konfigurationsinformationen enthält, zu der Mobilstation, wobei die Antwort-Nachricht die Dienst-Kennung (410) sowie die Options-Länge umfasst und die Antwort-Nachricht des Weiteren enthält:
1) die Fähigkeits-/Konfigurationsinformationen (430, 440) des Nachbar-Netzwerks, wenn die MAC-Adressinformation des Ziel-Nachbar-Netzwerks in der Anforderungs-Nachricht enthalten ist, und
2) die Fähigkeits-/Konfigurationsinformationen (430, 440) aller Netzwerke, die in der Nachbarschafts-Datenbank verzeichnet sind, wenn die MAC-Adressinformation des Ziel-Nachbarschafts-Netzwerks nicht in der Anforderungs-Nachricht enthalten ist.

20. Verfahren nach Anspruch 19, wobei der Netzwerkverwaltungs-Server ein DHCP-Server (dynamic host configuration protocol server) ist.

21. Computerlesbares Aufzeichnungsmedium, das ein Programm zum Implementieren eines Verfahrens zum Bereitstellen von Informationen über ein Nachbar-Netzwerk speichert, wobei das Verfahren umfasst:
Führen einer Nachbarschafts-Datenbank (120), die Fähigkeits-/Konfigurationsinformationen bezüglich wenigstens eines Nachbar-Netzwerks aufzeichnet, das sich um einen Netzwerkverwaltungs-Server (113) herum befindet;
Empfangen einer Nachricht zum Anfordern der Fähigkeits-/Konfigurationsinformationen des Nachbar-Netzwerks von einer Mobilstation, die über einen vorgegebenen Zugangspunkt oder eine Basisstation verbunden ist, wobei die Anforderungs-Nachricht eine Dienst-Kennung (310) sowie eine Options-Länge (320) umfasst und selektiv eine MAC-Adressinformation eines Ziel-Nachbar-Netzwerks enthält; und
Extrahieren der Fähigkeits-/Konfigurationsinformationen des Nachbar-Netzwerks, die in der Anforderungs-Nachricht (300) enthalten sind, durch Bezugnahme auf die Nachbarschafts-Datenbank (120), und Übertragen (216) einer Antwort-Nachricht (400), die die Fähigkeits-/Konfigurationsinformationen enthält, zu der Mobilstation, wobei die Antwort-Nachricht die Dienst-Kennung (410) sowie die Options-Länge umfasst und die Antwort-Nachricht des Weiteren enthält:
1) die Fähigkeits-/Konfigurationsinformationen (430, 440) des Nachbar-Netzwerks, wenn die MAC-Adressinformation des Ziel-Nachbar-Netzwerks in der Anforderungs-Nachricht enthalten ist, und
2) die Fähigkeits-/Konfigurationsinformationen (430, 440) aller Netzwerke, die in der Nachbarschafts-Datenbank verzeichnet sind, wenn die MAC-Adressinformation des Ziel-Nachbarschafts-Netzwerks nicht in der Anforderungs-Nachricht enthalten ist.

## Revendications

1. Serveur de gestion de réseau (113) d'un système de réseau sans fil, le serveur comprenant :
une base de données de voisinage (120) prenant en charge de l'information de configuration concernant au moins un réseau voisin ;
une interface de communication recevant un message de demande (300) d'information de capacité/configuration du réseau voisin provenant d'une station mobile qui est connectée via un point d'accès prédéterminé ou une station de base, dans lequel le message de demande comprend un identifiant de service (310) et une longueur d'option (320), et inclut de manière sélective de l'information (330, 340) d'adresse de contrôle d'accès au support, soit Media Access Control ou MAC, d'un réseau voisin cible ; et
une unité de gestion de base de données extrayant l'information de capacité/configuration du réseau voisin incluse dans le message de demande en se référant à la base de données de voisinage, et en contrôlant un message de réponse (400) incluant l'information de capacité/configuration à transmettre à la station mobile via l'interface de communication, dans lequel le message de réponse comprend l'identifiant de service (410) et la longueur d'option (420), et le message de réponse inclut :
1) l'information de capacité/configuration (430, 440) du réseau voisin, lorsque l'information d'adresse MAC du réseau voisin cible est incluse dans le message de demande, et
2) l'information de capacité/configuration (430, 440) de tous les réseaux enregistrés dans la base de données de voisinage, lorsque l'information d'adresse MAC du réseau voisin cible n'est pas incluse dans le message de demande.

2. Serveur selon la revendication 1, dans lequel le serveur de gestion de réseau est un serveur à protocole de configuration dynamique des hôtes, soit Dynamic Host Configuration Protocol ou DHCP.

3. Serveur selon la revendication 1, dans lequel le message de demande est dans un format de trame à fonction de transfert indépendant du support, soit Media Independent Handover Function ou MIHF, selon la norme IEEE 802.21, et comprend un champ d'identifiant de transfert indépendant du support, soit Media Independent Handover ou MIH, comprenant un identifiant de service et une longueur d'option, et un champ de charge utile MIHF incluant de manière sélective de l'information d'adresse MAC d'un réseau voisin cible.

4. Serveur selon la revendication 1, dans lequel le message de réponse est dans un format de trame à fonction de transfert indépendant du support, MIHF, selon la norme IEEE 802.21, et comprend un champ d'identifiant de transfert indépendant du support, MIH, comprenant un identifiant de service et une longueur d'option, et le champ de charge utile MIHF incluant l'information de capacité/configuration d'un réseau voisin cible.

5. Serveur selon la revendication 4, dans lequel l'information de capacité/configuration du réseau voisin cible incluse dans le champ de charge utile MIHF comprend l'information de capacité/configuration concernant tous les réseaux voisins enregistrés dans la base de données de voisinage ou un réseau voisin cible particulier inclus dans le message de demande.

6. Serveur selon la revendication 1, dans lequel le serveur de gestion de réseau est localisé pour chaque réseau sans fil du système de réseau sans fil.

7. Serveur selon la revendication 1, dans lequel l'information de capacité/configuration comprend ou moins soit le point d'accès du réseau voisin ou une adresse MAC de la station de base, un identifiant d'opérateur, un identifiant de serveur d'accès au réseau, soit Network Access Server ou NAS, de l'information d'identifiant IP, le type de réseau, la version IP 4/6, soit IPv4/6, un type de radio, une liste de partenaires d'itinérance, de l'information de compatibilité IPv4/IPv6, de l'information de sécurité, de l'information de niveau de qualité de service, soit Quality of Service ou QoS, pour chaque réseau, de l'information de charge actuelle pour chaque réseau voisin, une géolocalisation, une fonction de pré-authentification, un barème de prix, une liste de services géolocalisés, soit Location Based Service ou LBS, de l'information de prise en charge de réseau privé virtuel,
soit Virtual Private Network ou VPN, un type de couche physique, ou un paramètre de canal.

8. Serveur selon la revendication 1, dans lequel le système de réseau sans fil est un protocole intégralement Internet.

9. Procédé de recherche d'un réseau voisin, le procédé comprenant :
la réception d'information de balise provenant du réseau voisin, et l'identification du réseau voisin en utilisant l'information de balise ;
la transmission (213) d'un message de demande (300) d'information de capacité/configuration du réseau voisin à un serveur de gestion de réseau prédéterminé via un point d'accès ou une station de base, dans lequel le message de demande comprend un identifiant de service (310) et une longueur d'option (320), et inclut de manière sélective de l'information d'adresse de contrôle d'accès au support, MAC, d'un réseau voisin cible ; et
la réception d'un message de réponse (400) incluant l'information de capacité/configuration concernant le réseau voisin provenant du serveur de gestion de réseau, dans lequel le message de réponse comprend l'identifiant de service (410) et la longueur d'option (420), et le message de réponse inclut en outre :
1) l'information de capacité/configuration (430, 440) du réseau voisin, lorsque l'information d'adresse MAC du réseau voisin cible est incluse dans le message de demande, et
2) l'information de capacité/configuration (430, 440) de tous les réseaux enregistrés dans la base de données de voisinage, lorsque l'information d'adresse MAC du réseau voisin cible n'est pas incluse dans le message de demande.

10. Procédé selon la revendication 9, dans lequel l'information de balise comprend le point d'accès ou une adresse MAC de la station de base.

11. Procédé selon la revendication 9, dans lequel le serveur de gestion de réseau est un serveur à protocole de configuration dynamique des hôtes, DHCP.

12. Procédé selon la revendication 9, dans lequel le message de demande est dans un format de trame à fonction de transfert indépendant du support, MIHF, selon la norme IEEE 802.21, et comprend un champ d'identifiant de transfert indépendant du support, MIH, comprenant un identifiant de service et une longueur d'option, et un champ de charge utile MIHF incluant de manière sélective de l'information d'adresse MAC d'un réseau voisin cible.

13. Procédé selon la revendication 9, dans lequel le message de réponse est dans un format de trame à fonction de transfert indépendant du support, MIHF, selon la norme IEEE 802.21, et comprend le champ d'identifiant de transfert indépendant du support, MIH, comprenant l'identifiant de service et la longueur d'option, et le champ de charge utile MIHF incluant l'information de capacité/configuration du réseau voisin cible.

14. Procédé selon la revendication 13, dans lequel l'information de capacité/configuration du réseau voisin cible incluse dans le champ de charge utile MIHF comprend l'information de capacité/configuration concernant tous les réseaux voisins qui sont enregistrés dans la base de données de voisinage ou dans un réseau voisin cible particulier qui est inclus dans le message de demande.

15. Procédé selon la revendication 9, dans lequel le serveur de gestion de réseau est installé pour chaque réseau sans fil du système de réseau sans fil.

16. Procédé selon la revendication 9, dans lequel l'information de capacité/configuration comprend au moins le point d'accès du réseau voisin ou une adresse MAC de la station de base, un identifiant d'opérateur, un identifiant de serveur d'accès au réseau, NAS, de l'information d'identifiant IP, le type de réseau, une version IP 4/6, soit IPv4/6, un type de radio, une liste de partenaires d'itinérance, de l'information de compatibilité IPv4/IPv6, de l'information de sécurité, de l'information de niveau de qualité de service, QoS, pour chaque réseau, de l'information de charge actuelle pour chaque réseau voisin, une géolocalisation, une fonction de pré-authentification, un
barème de prix, une liste de services géolocalisés, LBS, de l'information de prise en charge de réseau privé virtuel, VPN, un type de couche physique, ou un paramètre de canal.

17. Procédé selon la revendication 9, le procédé comprenant en outre :
l'analyse de l'information de capacité/configuration du réseau voisin qui est incluse dans le message de réponse ;
la sélection du réseau voisin qui se connectera à partir d'un résultat de l'analyse ; et
la connexion du réseau voisin sélectionné.

18. Support d'enregistrement lisible par un ordinateur, stockant un programme pour mettre en oeuvre un procédé de recherche de réseau voisin, le procédé comprenant :
la réception d'information de balise provenant du réseau voisin, et l'identification du réseau voisin en utilisant l'information de balise ;
la transmission (213) d'un message de demande (300) d'information de capacité/configuration du réseau voisin à un serveur de gestion de réseau prédéterminé via un point d'accès ou une station de base, dans lequel le message de demande comprend un identifiant de service (310) et une longueur d'option (320), et inclut de manière sélective de l'information d'adresse de contrôle d'accès au support, MAC, d'un réseau voisin cible ; et
la réception d'un message de réponse (400) incluant l'information de capacité/configuration concernant le réseau voisin provenant du serveur de gestion de réseau, dans lequel le message de réponse comprend l'identifiant de service (410) et la longueur d'option (420), et le message de réponse inclut en outre :
1) l'information de capacité/configuration (430, 440) du réseau voisin, lorsque l'information d'adresse MAC du réseau voisin cible est incluse dans le message de demande, et
2) l'information de capacité/configuration (430, 440) de tous les réseaux enregistrés dans la base de données de voisinage, lorsque l'information d'adresse MAC du réseau voisin cible n'est pas incluse dans le message de demande.

19. Procédé pour fournir de l'information de réseau voisin, le procédé comprenant :
la prise en charge d'une base de données de voisinage (120) qui enregistre de l'information de capacité/configuration concernant au moins un réseau voisin situé autour d'un serveur de gestion de réseau (113) ;
la réception d'un message de demande (300) de l'information de capacité/configuration du réseau voisin provenant d'une station mobile qui est connectée via un point d'accès prédéterminé ou une station de base, dans lequel le message de demande comprend un identifiant de service (310) et une longueur d'option (320), et inclut de manière sélective de l'information d'adresse de contrôle d'accès au support, MAC, d'un réseau voisin cible ; et
l'extraction de l'information de capacité/configuration du réseau voisin incluse dans le message de demande (300) en se référant à la base de données de voisinage (120), et la transmission (216) d'un message de réponse (400) incluant l'information de capacité/configuration de la station mobile, dans lequel le message de réponse comprend l'identifiant de service (410) et la longueur d'option (420), et le message de réponse inclut en outre :
1) l'information de capacité/configuration (430, 440) du réseau voisin, lorsque l'information d'adresse MAC du réseau voisin cible est incluse dans le message de demande, et
2) l'information de capacité/configuration (430, 440) de tous les réseaux enregistrés dans la base de données de voisinage, lorsque l'information d'adresse MAC du réseau voisin cible n'est pas incluse dans le message de demande.

20. Procédé selon la revendication 19, dans lequel le serveur de gestion de réseau est un serveur à protocole de configuration dynamique des hôtes, DHCP.

21. Support d'enregistrement lisible par un ordinateur, stockant un programme pour mettre en oeuvre un procédé de fourniture d'information de réseau voisin, le procédé comprenant :
la prise en charge d'une base de données de voisinage (120) qui enregistre de l'information de capacité/configuration concernant au moins un réseau voisin situé autour d'un serveur de gestion de réseau (113) ;
la réception d'un message de demande (300) de l'information de capacité/configuration du réseau voisin provenant d'une station mobile qui est connectée via un point d'accès prédéterminé ou une station de base, dans lequel le message de demande comprend un identifiant de service (310) et une longueur d'option (320), et inclut de manière sélective de l'information d'adresse de contrôle d'accès au support, MAC, d'un réseau voisin cible ; et
l'extraction de l'information de capacité/configuration du réseau voisin incluse dans le message de demande (300) en se référant à la base de données de voisinage (120), et la transmission (216) d'un message de réponse (400) incluant l'information de capacité/configuration de la station mobile, dans lequel le message de réponse comprend l'identifiant de service (410) et la longueur d'option (420), et le message de réponse inclut en outre :
1) l'information de capacité/configuration (430, 440) du réseau voisin, lorsque l'information d'adresse MAC du réseau voisin cible est incluse dans le message de demande, et
2) l'information de capacité/configuration (430, 440) de tous les réseaux enregistrés dans la base de données de voisinage, lorsque l'information d'adresse MAC du réseau voisin cible n'est pas incluse dans le message de demande.
